# EUROPEAN PATENT SPECIFICATION

(11) **EP 4 167 360 B1**
(45) Date of publication and mention of the grant of the patent: **03.06.2026**
(21) Application number: 21892378.7
(22) Date of filing: 12.11.2021
(51) Int. Cl.: H01M 50/20, H01M 50/213, H01M 10/42, H01M 10/6562, H01M 10/625, H01M 10/623, H01M 10/613, H01M 50/209, H01M 50/211, H01M 50/284, H01M 50/296, H01M 50/50, H01M 10/48

(54) **BATTERY PACK, VEHICLE, AND ELECTRONIC DEVICE**
BATTERIEPACK, FAHRZEUG UND ELEKTRONISCHE VORRICHTUNG
BLOC-BATTERIE, VÉHICULE, ET DISPOSITIF ÉLECTRONIQUE

(30) Priority: 13.11.2020 KR 20200152313
(43) Date of publication of application: 19.04.2023
(73) Proprietor: LG Energy Solution, Ltd., Seoul 07335 (KR)
(72) Inventor: JANG, Jae-Young, Daejeon 34122 (KR); KWON, Jae-Kuk, Daejeon 34122 (KR); LEE, Jin-Hyun, Daejeon 34122 (KR)
(74) Representative: Goddar, Heinz J.
(86) International application number: PCT/KR2021/016578
(87) International publication number: WO 2022/103211

(56) References cited:
- EP-A1- 2 597 720
- EP-B1- 3 032 612
- CN-U- 209 515 831
- JP-A- 2013 114 780
- KR-A- 20200 010 947
- KR-A- 20200 038 801
- KR-A- 20200 051 393
- US-B2- 8 865 338
- US-B2- 9 017 855

## Description

### TECHNICAL FIELD

The present invention relates to a battery pack, a vehicle, and an electronic device, and more particularly, to a battery pack in which maximum allowable current is increased by reducing electrical resistance, and an electronic device and a vehicle including the battery pack.

The present application claims priority to Korean Patent Application No. 10-2020-0152313 filed on November 13, 2020 in the Republic of Korea.

### BACKGROUND ART

As the demand for portable electronic products such as laptops, video cameras, and mobile phones has recently rapidly increased and the development of electric vehicles, energy storage batteries, robots, satellites, etc. has begun in earnest, research on highperformance secondary batteries capable of repeated charge/discharge has been actively conducted.

Currently commercialized secondary batteries include nickel cadmium batteries, nickel hydride batteries, nickel zinc batteries, and lithium secondary batteries. Among them, lithium secondary batteries are in the spotlight because they have almost no memory effect compared to nickel-based secondary batteries, and thus have advantages of free charge/discharge, very low self-discharge rate, and high energy density.

A lithium secondary battery mainly uses a lithium-based oxide and a carbon material as a positive electrode active material and a negative electrode active material, respectively. Also, the lithium secondary battery includes an electrode assembly in which a positive electrode plate and a negative electrode plate to which the positive electrode active material and the negative electrode active material are respectively applied are located with a separator therebetween, and a casing, that is, a battery case, for sealing and accommodating the electrode assembly along with an electrolytic solution. A plurality of lithium secondary batteries may be provided in a battery pack.

Recently, the demand for large-capacity battery packs applied to means of transportation such as electric vehicles, electric bicycles, or electronic kickboards has increased. Also, such a battery pack is required to exhibit high power in order to increase the speed of a means of transportation. Accordingly, it is necessary to increase the capacity of a battery pack and current intensity during discharging.

However, because a battery pack is often mounted in a narrow space of a means of transportation, it is also necessary to minimize the size of a bus bar or a metal plate electrically connected to a plurality of secondary batteries. In other words, a battery pack of the related art has a large restriction on the shape or size of internal components, and thus, there is a great limit in increasing allowable current intensity for a bus bar or a metal plate.

However, a battery pack applied to such a means of transportation has problems in that due to frequency vibration and impact, connection or coupling between internal components in the battery pack is released or the components are separated from one another. Accordingly, for the battery pack of the related art, a method of stably maintaining mounted states of internal components is required. EP 3 032 612 B1 discloses a battery pack according to the preamble of claim 1.

### DISCLOSURE

### Technical Problem

The present invention is designed to solve the problems of the related art, and therefore the present invention is directed to providing a battery pack in which maximum allowable current is increased by reducing electrical resistance, and an electronic device and a vehicle including the battery pack.

These and other objects and advantages of the present invention may be understood from the following detailed description and will become more fully apparent from the exemplary embodiments of the present invention.

Also, it will be easily understood that the objects and advantages of the present invention may be realized by the means shown in the appended claims and combinations thereof.

### Technical Solution

In one aspect of the present invention, there is provided a battery pack according to claim 1.

The battery pack may further include a battery management system (BMS) module configured to control charging and discharging of the plurality of battery cells, wherein each of the at least two connection plates includes: a connection terminal portion contacting the electrode terminal of each of the plurality of battery cells; and a connection extending portion extending from the connection terminal portion to be connected to the BMS module.

The cell frame may further include at least two second fixing protrusions protruding outward from an outer surface of the cell frame and configured to respectively support both end portions of the connection extending portion.

The first fixing protrusion may obliquely extend outward.

An outwardly protruding end portion of the first fixing protrusion may be bent at a certain angle.

The cell frame may include: a ventilation hole formed by perforating a portion of the cell frame so that air flows between the plurality of battery cells; and a reinforcing rib extending to cross the inside of the ventilation hole.

The at least two through-holes spaced apart from one another in the current flowing direction may be provided in the connection plate located at an end of current flow among the at least two connection plates.

A pair of adjacent through-holes among the at least two through-holes may be spaced apart from one another in a direction perpendicular to the current flowing direction.

In another aspect of the present invention, there is also provided a vehicle including at least one battery pack as described above.

In another aspect of the present invention, there is also provided an electronic device including at least one battery pack as described above.

### Advantageous Effects

According to an aspect of the present invention, because a connection plate in which at least two through-holes spaced apart from one another in a current flowing direction are formed is included, an increase in electrical resistance due to the formation of the at least two through-holes may be minimized. That is, because the connection plate has the through-hole spaced apart from one another in the current flowing direction, when compared to a case where at least two through-holes located on the same extension line are formed in a direction parallel to an X-axis, a cross-sectional area cut in a direction parallel to an X-Z plane in a region where the through-holes are formed is larger. Accordingly, according to the present invention, an increase in electrical resistance of a connection plate due to a reduction in a cross-sectional area according to the formation of a plurality of through-holes may be minimized. In particular, according to the present invention, the electrical resistance of a connection plate located at an end of current flow among a plurality of connection plates may be effectively reduced, thereby reducing a restriction on maximum allowable current and reducing the amount of heat generated by the electrical resistance.

### DESCRIPTION OF DRAWINGS

The accompanying drawings illustrate a preferred embodiment of the present invention and together with the foregoing disclosure, serve to provide further understanding of the technical features of the present invention, and thus, the present invention is not construed as being limited to the drawing.
FIG. 1 is a perspective view illustrating a battery pack according to an embodiment of the present invention.
FIG. 2 is an exploded perspective view illustrating the battery pack according to an embodiment of the present invention.
FIG. 3 is a partial perspective view illustrating some elements of the battery pack according to an embodiment of the present invention.
FIG. 4 is a partial side view illustrating some elements of a battery pack according to another embodiment of the present invention.
FIG. 5 is a partial side view illustrating some elements of a battery pack according to still another embodiment of the present invention.
FIG. 6 is a front view illustrating a battery pack according to an embodiment of the present invention.

### BEST MODE

Hereinafter, preferred embodiments of the present invention will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present invention on the basis of the principle that the inventor is allowed to define terms appropriately for the best explanation.

Therefore, the description proposed herein is just a preferable example for the purpose of illustrations only.

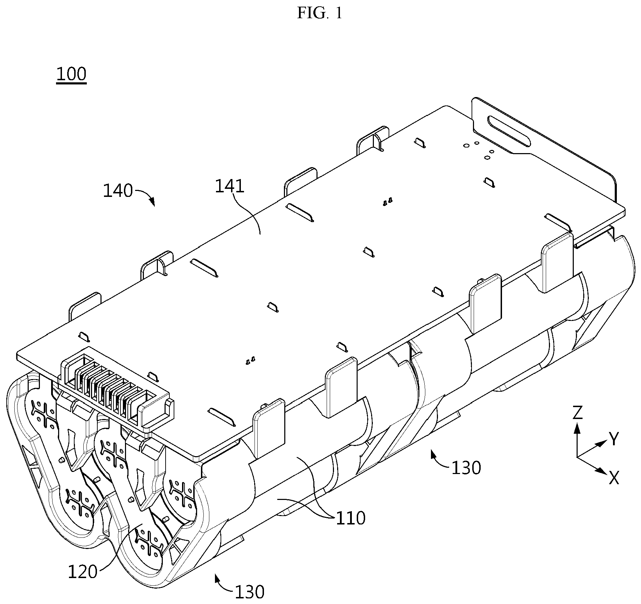

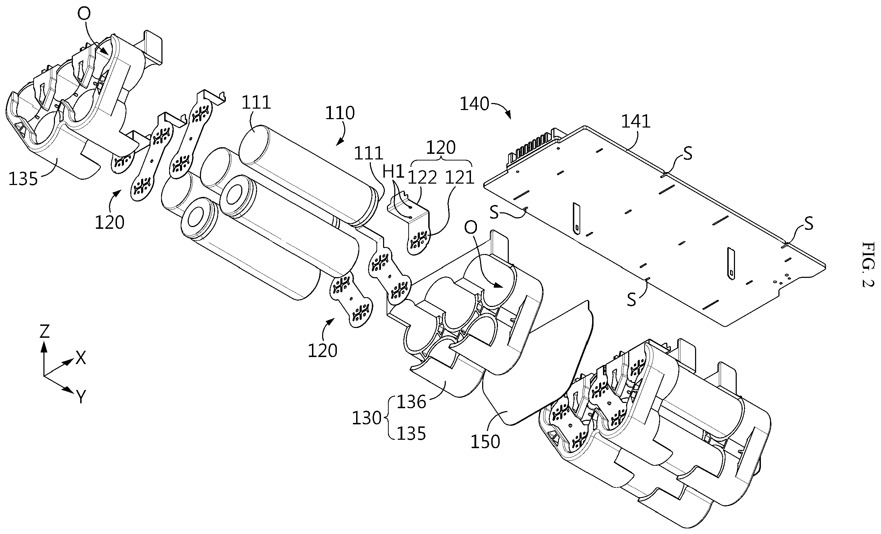

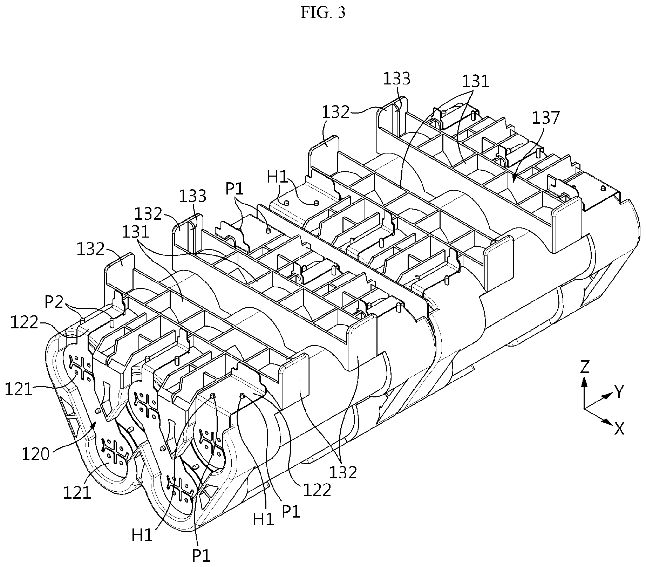

FIG. 1 is a perspective view illustrating a battery pack according to an embodiment of the present invention. FIG. 2 is an exploded perspective view illustrating the battery pack according to an embodiment of the present invention. FIG. 3 is a partial perspective view illustrating some elements of the battery pack according to an embodiment of the present invention.

Referring to FIGS. 1 through 3, a battery pack 100 according to an embodiment of the present invention includes a plurality of battery cells 110, at least two connection plates 120, and a cell frame 130.

In detail, the battery cell 110 may be a cylindrical battery cell 110. Electrode terminals 111 may be respectively located at the front (negative direction of a Y-axis) and the rear (positive direction of the Y-axis) of the battery cell 110. The electrode terminal 111 may be a positive electrode terminal or a negative electrode terminal. For reference, a Z-axis direction of FIG. 1 may refer to an up-down direction, a Y-axis direction may refer to a front-back direction, and an X-axis direction may refer to a left-right direction.

Also, the at least two connection plates may be metal plates having electrical conductivity. The connection plate 120 may include a metal such as aluminum, copper, or nickel. The connection plate 120 may be configured to electrically connect the plurality of battery cells 110. The plurality of cylindrical battery cells 110 may be electrically connected in series or in parallel, or in series and in parallel, through the connection plate 120. An end portion of the connection plate 120 may be electrically connected to a positive electrode terminal 111 and/or a negative electrode terminal 112 of the cylindrical battery cell 110. The other end portion of the connection plate 120 may be electrically connected to a BMS module 140.

Also, each of the at least two connection plates 120 may include a connection terminal portion 121 and a connection extending portion 122. The connection terminal portion 121 may contact the electrode terminal of each of the plurality of battery cells 110. For example, the connection terminal portion 121 may be welded to the electrode terminal to be electrically connected to the battery cell 110. The connection extending portion 122 may extend from the connection terminal portion 121 to be connected to the BMS module 140. An end portion of the connection extending portion 122 may be electrically connected to a connection terminal (not shown) of the BMS module 140.

Furthermore, at least one of the at least two connection plates 120 may include at least two through-holes H1 spaced apart from one another in a current flowing direction. For example, the at least two through-holes H1 spaced apart from one another in the current flowing direction (Y-axis direction) may be formed in the connection plate 120 located at an end of current flow, among the at least two connection plates 120. In this case, the at least two through-holes H1 spaced apart from one another in the current flowing direction may be provided in the connection extending portion 122. The current flowing direction may be a direction in which the connection plate 120 extends to be connected to the connection terminal of the BMS module 140.

A pair of adjacent through-holes H1 among the at least two through-holes H1 may be spaced apart from one another in a direction (X-axis direction) substantially perpendicular to the current flowing direction. Due to the arrangement of the through-holes H1, when the connection plate 120 and a first fixing protrusion P1 described below are coupled to each other, the connection plate 120 may be more stably supported by the first fixing protrusion P1.

The cell frame 130 may include a first frame 135 and a second frame 136. Each of the first frame 135 and the second frame 1365 may have a plurality of hollow holes O to surround at least a portion of each of the plurality of battery cells 110. For example, as shown in FIG. 1, the first frame 135 may have five hollow holes O to surround front portions of the five battery cells 110. The second frame 136 may have five hollow holes O to surround rear portions of the five battery cells 110. The cell frame 130 may have an electrically insulating material. For example, the cell frame 130 may be formed of polyvinyl chloride (PVC).

The connection plate 120 may be mounted outside the cell frame 130. For example, as shown in FIG. 2, three connection plates 120 among six connection plates 120 may be mounted on a front end and an upper end of the first frame 135. The remaining three connection plates 120 may be mounted on a rear end and an upper end of the second frame 136.

Furthermore, the cell frame 130 may include at least two first fixing protrusions P1. The at least two first fixing protrusions P1 may respectively pass through the at least two through-holes H1 of the connection plate 120. The first fixing protrusion P1 may protrude outward from an outer surface of the cell frame 130. The at least two first fixing protrusions P1 may be spaced apart from one another in the current flowing direction (Y direction) of the connection plate 120. The first fixing protrusion P1 may have a cylindrical shape extending upward or forward. The "current flowing direction" may be the same as, for example, a direction in which the connection plate 120 longitudinally extends toward the BMS module 140.

Also, the battery pack 100 may include two or more cell frames 130 arranged in the front-back direction. The battery pack 100 may further include an insulating sheet 150 having electrical insulation to be located between the two or more cell frames 130. The insulating sheet 150 may include, for example, a silicone material.

Accordingly, according to this configuration of the present invention, because the connection plate 120 in which at least two through-holes H1 spaced apart from one another in the current flowing direction (Y-axis direction) are formed is included, an increase in electrical resistance due to the formation of the at least two through-holes H1 may be minimized. That is, because the through-holes H1 spaced apart from one another in the current flowing direction (Y-axis direction) are formed in the connection plate 120, when compared to a cross-sectional area of a portion where two through-holes are formed when two or more through-holes are not spaced apart from one another in the Y-axis direction, that is, are formed in parallel in the X direction in a connection plate of the prior art, a cross-sectional area of a portion where the through-holes H1 are formed in a direction perpendicular to current flow (e.g., cross-sectional area cut in the X-axis direction and the Z-axis direction when the Y-axis direction is the current flowing direction) is larger.

In other words, because the connection plate 120 of the present invention includes the through-holes H1 spaced apart from one another in the Y-axis, when compared to a case where the two through-holes H1 are formed in parallel in the X-axis, a cross-sectional area cut in the X-axis direction and the Z-axis direction of a position where the through-holes H1 are formed is less reduced.

Accordingly, an increase in electrical resistance of the connection plate 120 according to the formation of the plurality of through-holes H1 may be minimized. In particular, according to the present disclosure, the electrical resistance of the connection plate 120 located at an end of current flow among the plurality of connection plates 120 may be effectively reduced, thereby reducing a restriction on maximum allowable current and reducing the amount of heat generated by the electrical resistance.

Referring back to FIGS. 1 through 3, the battery pack 100 according to an embodiment of the present invention further includes the BMS module 140. Here, BMS stands for battery management system. That is, the BMS module 140 is configured to control charging and discharging of the plurality of battery cells 110. The BMS module 140 includes a protection circuit board 141 including a printed circuit.

Referring back to FIGS. 1 through 3, the cell frame 130 of the battery pack 100 according to an embodiment of the present invention may further include at least two second fixing protrusions P2. The second fixing protrusion P2 may protrude outward from an outer surface. The second fixing protrusion P2 may have a cylindrical shape extending upward or forward. The at least two second fixing protrusions P2 may respectively support both end portions of the connection extending portion 122 in the left-right direction. For example, as shown in FIG. 3, two second fixing protrusions P2 extending upward may be provided on the cell frame 130. The two second fixing protrusions P2 may be located to respectively support both end portions of the connection extending portion 122 of the connection plate 120 in the left-right direction toward the connection extending portion 122.

Accordingly, according to this configuration of the present invention, because at least two second fixing protrusions P2 configured to support the connection extending portion 122 of the connection plate 120 are provided, the connection extending portion 122 may be stably fixed to an outer surface of the cell frame 130. That is, a movement of the connection extending portion 122 in the left-right direction may be limited by the at least two second fixing protrusions P2. Accordingly, according to the present invention, an electrical connection state between the BMS module 140 and the connection extending portion 122 of the connection plate 120 may be stably maintained.

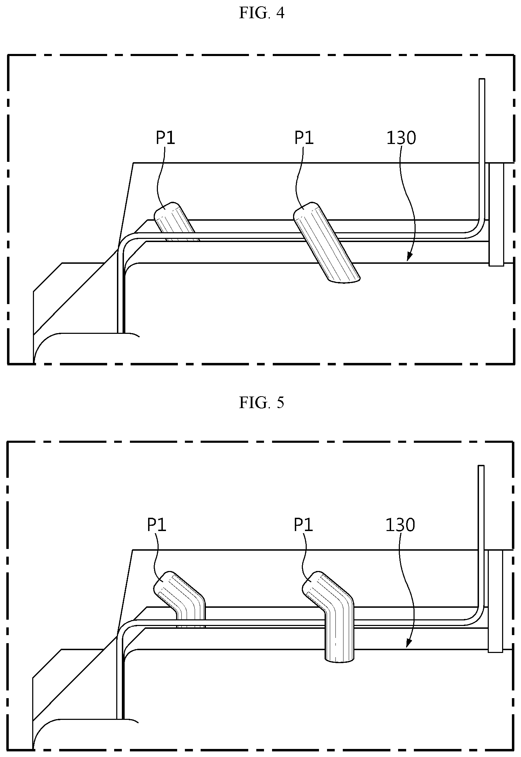

FIG. 4 is a partial side view illustrating some elements of a battery pack according to another embodiment of the present invention.

Referring to FIG. 4, in the battery pack 100 according to another embodiment of the present invention, a shape of the first fixing protrusion P1 may be different from that of the first fixing protrusion P1 of FIG. 3. Other elements may be the same as those of the battery pack of FIG. 3.

The first fixing protrusion P1 of FIG. 4 may obliquely extend outward. For example, as shown in FIG. 4, the first fixing protrusion P1 may be inclined forward. Accordingly, the first fixing protrusion P1 may be obliquely inserted into the through-hole H1 of the connection plate 120. Because the first fixing protrusion P1 obliquely extends, after the first fixing protrusion P1 is inserted into the through-hole H1 of the connection plate 120, the first fixing protrusion P1 may be prevented from being separated from the through-hole H1 due to external impact or an external force. That is, an inclined portion of the first fixing protrusion P1 may support a top surface of the connection plate 120 downward.

Accordingly, according to this configuration of the present invention, because the first fixing protrusion P1 obliquely extends outward, after the first fixing protrusion P1 is inserted into the through-hole H1 of the connection plate 120, the first fixing protrusion P1 may be prevented from being separated from the through-hole H1 due to external impact or an external force. Accordingly, according to the present invention, because the connection extending portion 122 may be stably fixed by the first fixing protrusions P1, electrical connection between an end portion of the connection extending portion 122 and a connection terminal (not shown) of the BMS module 140 may be stably maintained.

FIG. 5 is a partial side view illustrating some elements of a battery pack according to still another embodiment of the present invention.

Referring to FIG. 5, in the battery pack 100 according to still another embodiment of the present invention, a shape of the first fixing protrusion P1 may be different from that of the first fixing protrusion P1 of FIG. 3. Other elements may be the same as those of the battery pack 100 of FIG. 3.

That is, an outwardly protruding end portion of the first fixing protrusion P1 of FIG. 5 is bent at a certain angle, when compared to FIG. 3. For example, as shown in FIG. 5, the protruding end portion of the first fixing protrusion P1 may be bent at about 30° with respect to a vertical direction. Also, an upper end portion of the first fixing protrusion P1 may be inserted into the through-hole H1 formed in the connection extending portion 122 of the connection plate 120 at 30°, and then may be vertically inserted downward.

Accordingly, according to this configuration of the present invention, because the first fixing protrusion P1 that is bent at a certain angle is provided, the connection extending portion 122 of the connection plate 120 may be effectively prevented from being separated from an outer surface of the cell frame 130. That is, an upward movement of the connection extending portion 122 may be limited by the bent shape of the first fixing protrusion P1. Accordingly, according to the present invention, because the connection extending portion 122 may be stably fixed by the first fixing protrusion P1, electrical connection between an end portion of the connection extending portion 122 and a connection terminal (not shown) of the BMS module 140 may be stably maintained.

Referring back to FIGS. 1 through 3, the cell frame 130 of the battery pack 100 according to an embodiment of the present invention includes a BMS mounting portion 137. The BMS mounting portion 137 includes a seating rib 131 and a plurality of fixing tabs 132. The seating rib 131 may support a top surface or a bottom surface of the BMS module 140. The seating rib 131 may have a rib shape protruding toward the BMS module 140. That is, the seating rib 131 may have a plate shape extending in the X-axis direction and a plate shape extending in the Y-axis direction. An upper end of the seating rib 131 may support upward a bottom surface of the protection circuit board 141 of the BMS module 140.

Also, the plurality of fixing tabs 132 may protrude outward to support both side portions of the BMS module 140. For example, as shown in FIG. 3, the plurality of fixing tabs 132 may be formed at a left end and a right end of the cell frame 130. The fixing tab 132 formed at the left end may support a left end of the BMS module 140 rightward. The fixing tab 132 formed at the right end may support a right end of the BMS module 140 leftward. The plurality of fixing tabs 132 may extend upward from a left end or a right end of the seating rib 131.

Accordingly, according to this configuration of the present invention, because the BMS mounting portion 137 including the seating rib 131 and the fixing tab 132 is provided, the BMS module 140 may be stably mounted on the battery pack 100. Accordingly, when the battery pack 100 is mounted in a means of transportation such as a vehicle, frequent vibration and impact may occur. However, because the battery pack 100 of the present invention is configured so that a movement of the BMS module 140 in the left-right direction and a downward movement are limited, a connection structure with the connection plate 120 may be effectively prevented from being disconnected due to shaking of the BMS module 140. Ultimately, according to the present invention, the durability of the battery pack 100 may be effectively increased.

Referring back to FIGS. 1 through 3, the protection circuit board 141 of the BMS module 140 includes a plurality of slits S formed inward from an end portion. Also, a binding rib 133 protruding toward the slit S is provided on the fixing tab 132 to be inserted into the slit S. The binding rib 133 may longitudinally extend in the up-down direction. In this case, the binding rib 133 may be inserted into the slit S and may press an inner surface of the slit S inward, to fix the protection circuit board 141. That is, as the protection circuit board 141 moves downward, the binding rib 133 of the fixing tab 132 may be inserted into the slit S. In other words, the BMS module 140 may be fixed to the BMS mounting portion 137 when the binding rib 133 of the fixing tab 132 and the slit S of the protection circuit board 141 are coupled to each other. That is, when the BMS module 140 is mounted on the BMS mounting portion 137, due to a fastening structure between the slit S and the binding rib 133, a movement of the protection circuit board 141 in the front-back direction, the up-down direction, and the left-right direction may be limited.

Accordingly, according to this configuration of the present invention, the BMS module 140 may be stably fixed to the cell frame 130 through the slit S of the protection circuit board 141 and the binding rib 133 formed on the fixing tab 132. Accordingly, according to the present invention, because the battery pack 100 is configured to limit a movement of the BMS module 140, a connection structure with the connection plate 120 may be effectively prevented from being disconnected due to shaking of the BMS module 140. Ultimately, according to the present invention, the durability of the battery pack 100 may be effectively increased.

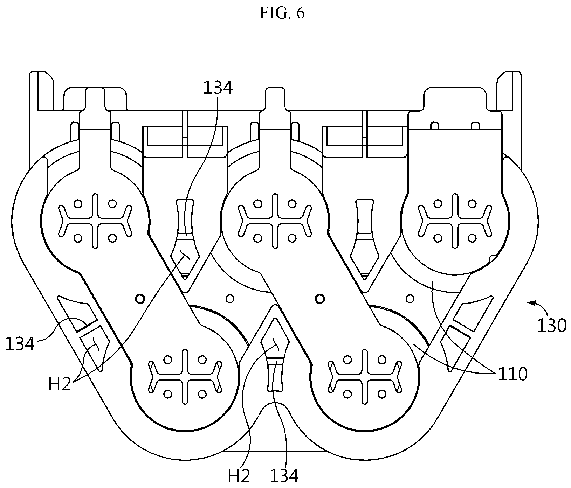

FIG. 6 is a front view illustrating a battery pack according to an embodiment of the present invention.

Referring to FIG. 6, the cell frame 130 of the battery pack 100 according to an embodiment of the present invention may include a ventilation hole H2, and a reinforcing rib 134 formed in the ventilation hole H2. The ventilation hole H2 may be formed by perforating a portion so that air flows between the plurality of battery cells 110. For example, as shown in FIG. 6, the ventilation hole H2 may be formed by perforating a portion from a front end to a rear end of the cell frame 130. The ventilation hole H2 may be located between the plurality of battery cells 110. That is, the ventilation hole H2 may be configured to effectively move heat generated by the plurality of battery cells 110 in the front-back direction and discharge the heat to the outside.

The reinforcing rib 134 may be configured to reinforce mechanical rigidity of the cell frame 130. That is, when a plurality of ventilation holes H2 are formed in the cell frame 130, mechanical rigidity of the cell frame 130 may be reduced. In order to compensate for the reduction, the reinforcing rib 134 may extend to cross the inside of the ventilation hole H2.

Accordingly, according to this configuration of the present invention, because the ventilation hole H2 is formed in the cell frame 130, the cooling efficiency of the battery pack 100 may be effectively improved. Also, according to the present invention, because the reinforcing rib 134 is provided on the cell frame 130, a decrease in mechanical rigidity due to the formation of the ventilation hole H2 in the cell frame 130 may be effectively reduced.

A vehicle (not shown) according to an embodiment of the present invention may include at least one battery pack 100 and a vehicle body having a receiving space in which the battery pack 100 is accommodated. For example, a vehicle may be an electric vehicle, an electric kickboard, an electric scouter, an electric wheelchair, an electric bicycle, etc.

An electronic device (not shown) according to an embodiment of the present invention may include at least one battery pack 100 and an external housing having a receiving space in which the battery pack 100 is accommodated. Examples of the electronic device may include an interruptible power supply (UPS), a wireless computer, and a power storage device, etc.

It will be understood by one of ordinary skill in the art that when terms indicating directions such as upper, lower, left, right, front, and rear are used, these terms are only for convenience of explanation and may vary according to a position of a target object, a position of an observer, etc.

While one or more embodiments of the present invention have been described with reference to the embodiments and figures, the present invention is not limited thereto, and it will be understood by one of ordinary skill in the art that various changes in form and details may be made therein without departing from the scope of the present invention as defined by the following claims.

## Claims

1. A battery pack (100) comprising:
a plurality of battery cells (110) each provided with electrode terminals (111) on both end portions thereof;
at least two connection plates (120) having electrical conductivity and configured to electrically connect the plurality of battery cells (110); and
a cell frame (130) having a plurality of hollow holes (O) formed to surround at least a portion of each of the plurality of battery cells (110), allowing the connection plates (120) to be mounted outside the cell frame (130), and comprising at least two first fixing protrusions (P1) protruding outward to respectively pass through at least two through-holes (H1) of the connection plates (120), and
a battery management system (BMS) module (140) configured to control charging and discharging of the plurality of battery cells (110),
wherein at least one of the at least two connection plates (120) comprises at least two through-holes (H1) spaced apart from one another in a current flowing direction,
**characterized in that** the cell frame (130) comprises a BMS mounting portion (137) comprising:
a seating rib (131) protruding toward the BMS module (140) to support a top surface or a bottom surface of the BMS module (140), and
a plurality of fixing tabs (132) protruding outward to support both side portions of the BMS module (140), and
wherein the BMS module (140) comprises a protection circuit board (141) comprising a printed circuit,
wherein the protection circuit board (141) comprises a slit (S) formed inward from an end portion,
wherein a binding rib (133) configured to be inserted into the slit (S) is provided on the fixing tab (132).

2. The battery pack of claim 1,
wherein each of the at least two connection plates (120) comprises:
a connection terminal portion (121) contacting the electrode terminal (111) of each of the plurality of battery cells (110); and
a connection extending portion (122) extending from the connection terminal portion (121) to be connected to the BMS module (140).

3. The battery pack of claim 2, wherein the cell frame (130) further comprises at least two second fixing protrusions (P2) protruding outward from an outer surface of the cell frame (130) and configured to respectively support both end portions of the connection extending portion (122).

4. The battery pack of claim 2, wherein the first fixing protrusion (P1) obliquely extends outward.

5. The battery pack of claim 2, wherein an outwardly protruding end portion of the first fixing protrusion (P1) is bent at a certain angle.

6. The battery pack of claim 1, wherein the cell frame comprises:
a ventilation hole (H2) formed by perforating a portion of the cell frame (130) so that air flows between the plurality of battery cells (110); and
a reinforcing rib (134) extending to cross the inside of the ventilation hole (H2).

7. The battery pack of claim 1, wherein the at least two through-holes (H1) spaced apart from one another in the current flowing direction are provided in the connection plate (120) located at an end of current flow among the at least two connection plates (120).

8. The battery pack of claim 7, wherein a pair of adjacent through-holes (H1) among the at least two through-holes (H1) are spaced apart from one another in a direction perpendicular to the current flowing direction.

9. A vehicle comprising at least one battery pack (100) according to any one of claims 1 through 8.

10. An electronic device comprising at least one battery pack (100) according to any one of claims 1 through 8.

## Patentansprüche

1. Batteriepack (100) aufweisend:
mehrere Batteriezellen (110), die jeweils mit Elektrodenanschlüssen (111) an jeweiligen beiden Endabschnitten bereitgestellt sind;
mindestens zwei Verbindungsplatten (120), die elektrische Leitfähigkeit aufweisen und konfiguriert sind, um die mehreren Batteriezellen (110) elektrisch zu verbinden; und
einen Zellenrahmen (130), der mehrere Hohllöcher (O) aufweist, die ausgebildet sind, um mindestens einen Abschnitt von jeder der mehreren Batteriezellen (110) zu umgeben, wodurch ermöglicht wird, dass die Verbindungsplatten (120) außerhalb des Zellenrahmens (130) montiert werden, und der mindestens zwei erste Befestigungsvorsprünge (P1) aufweist, die nach außen vorstehen, um jeweils durch mindestens zwei Durchgangslöcher (H1) der Verbindungsplatten (120) hindurchzugehen, und
ein Batteriemanagementsystem-Modul, BMS-Modul (140), das konfiguriert ist, um das Laden und Entladen der mehreren Batteriezellen (110) zu steuern,
wobei mindestens eine der mindestens zwei Verbindungsplatten (120) mindestens zwei Durchgangslöcher (H1) aufweist, die in einer Stromflussrichtung voneinander beabstandet sind,
**dadurch gekennzeichnet, dass** der Zellenrahmen (130) einen BMS-Montageabschnitt (137) aufweist, der aufweist:
eine Sitzrippe (131), die in Richtung des BMS-Moduls (140) vorsteht, um eine obere Oberfläche oder eine untere Oberfläche des BMS-Moduls (140) zu stützen, und
mehrere Befestigungslaschen (132), die nach außen vorstehen, um beide Seitenabschnitte des BMS-Moduls (140) zu stützen, und
wobei das BMS-Modul (140) eine Schutzleiterplatte (141) aufweist, die eine gedruckte Schaltung aufweist,
wobei die Schutzleiterplatte (141) einen Schlitz (S) aufweist, der von einem Endabschnitt nach innen ausgebildet ist,
wobei eine Verbindungsrippe (133), die konfiguriert ist, um in den Schlitz (S) eingeführt zu werden, an der Befestigungslasche (132) bereitgestellt ist.

2. Batteriepack nach Anspruch 1,
wobei jede der mindestens zwei Verbindungsplatten (120) aufweist:
einen Verbindungsanschlussabschnitt (121), der den Elektrodenanschluss (111) von jeder der mehreren Batteriezellen (110) kontaktiert; und
einen Verbindungserstreckungsabschnitt (122), der sich von dem Verbindungsanschlussabschnitt (121) erstreckt, um mit dem BMS-Modul (140) verbunden zu werden.

3. Batteriepack nach Anspruch 2, wobei der Zellenrahmen (130) ferner mindestens zwei zweite Befestigungsvorsprünge (P2) aufweist, die von einer äußeren Oberfläche des Zellenrahmens (130) nach außen vorstehen und konfiguriert sind, um jeweils beide Endabschnitte des Verbindungserstreckungsabschnitts (122) zu stützen.

4. Batteriepack nach Anspruch 2, wobei sich der erste Befestigungsvorsprung (P1) schräg nach außen erstreckt.

5. Batteriepack nach Anspruch 2, wobei ein nach außen vorstehender Endabschnitt des ersten Befestigungsvorsprungs (P1) in einem bestimmten Winkel gebogen ist.

6. Batteriepack nach Anspruch 1, wobei der Zellenrahmen aufweist:
ein Belüftungsloch (H2), das durch Perforieren eines Abschnitts des Zellenrahmens (130) ausgebildet ist, so dass Luft zwischen den mehreren Batteriezellen (110) strömt; und
eine Verstärkungsrippe (134), die sich erstreckt, um die Innenseite des Belüftungslochs (H2) zu kreuzen.

7. Batteriepack nach Anspruch 1, wobei die mindestens zwei Durchgangslöcher (H1), die in der Stromflussrichtung voneinander beabstandet sind, in der Verbindungsplatte (120) vorgesehen sind, die sich an einem Ende des Stromflusses unter den mindestens zwei Verbindungsplatten (120) befindet.

8. Batteriepack nach Anspruch 7, wobei ein Paar benachbarter Durchgangslöcher (H1) unter den mindestens zwei Durchgangslöchern (H1) in einer Richtung senkrecht zu der Stromflussrichtung voneinander beabstandet sind.

9. Fahrzeug aufweisend mindestens einen Batteriepack (100) nach einem der Ansprüche 1 bis 8.

10. Elektronische Vorrichtung aufweisend mindestens einen Batteriepack (100) nach einem der Ansprüche 1 bis 8.

## Revendications

1. Bloc-batterie (100) comprenant :
une pluralité de cellules de batterie (110), chacune étant dotée de bornes d'électrode (111) sur leurs deux parties terminales ;
au moins deux plaques de connexion (120) présentant une conductibilité électrique et étant configurées pour assurer la connexion électrique entre la pluralité de cellules de batterie (110) ; et
un cadre de cellule (130) possédant une pluralité d'orifices creux (O) formés pour entourer au moins une partie de chacune de la pluralité de cellules de batterie (110), en permettant le montage des plaques de connexion (120) sur l'extérieur du cadre de cellule (130), et comprenant au moins deux premières saillies de fixation (P1) faisant saillie vers l'extérieur pour passer respectivement à travers au moins deux trous traversants (H1) des plaques de connexion (120), e
un module de système de gestion de batterie (BMS) (140) configuré pour gérer la charge et la décharge de la pluralité de cellules de batterie (110),
au moins une des deux plaques de connexion (120) comprenant au moins deux trous traversants (H1) espacés l'un de l'autre dans un sens du flux de courant,
**caractérisé en ce que**
le cadre de cellule (130) comprend une partie de montage du BMS (137) comprenant :
une nervure d'assise (131) saillante vers l'extérieur pour soutenir les deux parties latérales du module BMS (140) pour soutenir une surface supérieure ou une surface inférieure du module BMS (140), et
une pluralité de languettes de fixation (132) saillantes vers l'extérieur pour soutenir les deux parties latérales du module BMS (140), et
le module BMS (140) comprenant une carte de circuit de protection (141) comprenant un circuit imprimé,
une carte de circuit de protection (141) comprenant une fente (S) formée vers l'intérieur depuis une partie terminale,
une nervure de fixation (133) configurée pour être insérée dans la fente (S) étant pratiquée sur la languette de fixation (132).

2. Bloc-batterie selon la revendication 1,
chacune des au moins deux plaques de connexion (120) comprenant :
une partie de borne de connexion (121) contactant la borne d'électrode (111) de chacune de la pluralité de cellules de batterie (110) ; et
une partie d'extension de connexion (122) déployée depuis la partie de borne de connexion (121) devant être connectée au module BMS (140).

3. Bloc-batterie selon la revendication 2, le cadre de cellule (130) comprenant en outre au moins deux deuxièmes saillies de fixation (P2) saillantes d'une surface extérieure du cadre de cellule (130) vers l'extérieur, et configurées pour soutenir respectivement les deux parties terminales de la partie d'extension de connexion (122).

4. Bloc-batterie selon la revendication 2, la première saillie de fixation (P1) s'étendant vers l'extérieur de façon oblique.

5. Bloc-batterie selon la revendication 2, une partie terminale saillante vers l'extérieur de la première saillie de fixation (P1) étant fléchie à un certain angle.

6. Bloc-batterie selon la revendication 1, le cadre de cellule comprenant :
un orifice de ventilation (H2) formé en perforant une partie du cadre de cellule (130) de sorte que de l'air s'écoule entre la pluralité de cellules de batterie (110) ; et
une nervure de renfort (134) s'étendant pour croiser l'intérieur de l'orifice de ventilation (H2).

7. Bloc-batterie selon la revendication 1, les au moins deux trous traversants (H1) espacés l'un de l'autre dans le sens du flux de courant étant pratiqués dans la plaque de connexion (120) située à un bout du flux de courant parmi les au moins deux plaques de connexion (120).

8. Bloc-batterie selon la revendication 7, une paire de trous traversants (H1) adjacents parmi les au moins deux trous traversants (H1) étant espacés l'un de l'autre dans une direction perpendiculaire au sens du flux de courant.

9. Véhicule comprenant au moins un bloc-batterie (100) selon une quelconque des revendications 1 à 8.

10. Dispositif électronique comprenant au moins un bloc-batterie (100) selon une quelconque des revendications 1 à 8.
